# EUROPEAN PATENT SPECIFICATION

(11) **EP 4 044 810 B1**
(45) Date of publication and mention of the grant of the patent: **24.06.2026**
(21) Application number: 20797686.1
(22) Date of filing: 16.10.2020
(51) Int. Cl.: A01N 43/16, A01P 21/00

(54) **GROWTH ENHANCEMENT OF PLANT BY USING LOW MOLECULAR WEIGHT GUAR GUM**
FÖRDERUNG DES PFLANZENWACHSTUMS DURCH DIE VERWENDUNG VON GUARAN MIT NIEDRIEGEM MOLEKULARGEWICHT
AMÉLIORATION DE LA CROISSANCE DES PLANTES EN UTILISANT DE LA GOMME DE GUAR À FAIBLE POIDS MOLÉCULAIRE

(30) Priority: 18.10.2019 US 201962916914 P
(43) Date of publication of application: 24.08.2022
(73) Proprietor: SPECIALTY OPERATIONS FRANCE, 69003 Lyon (FR)
(72) Inventor: CASTAING, Jean-Christophe, 92310 Sèvres (FR); VERNAY, Clara, 75010 Paris (FR); LOPEZ, Francisco, Yardley, PA 19067 (US); VIDAL, Thierry, 69003 Lyon (FR)
(74) Representative: Delenne, Marc
(86) International application number: PCT/EP2020/079189
(87) International publication number: WO 2021/074369

(56) References cited:
- WO-A1-2014/005319
- WO-A1-2016/101862
- JP-A- 2002 051 611
- US-A1- 2012 220 454
- SAGAR PAL ET AL: "Synthesis and characterization of cationic guar gum: A high performance flocculating agent", JOURNAL OF APPLIED POLYMER SCIENCE, vol. 105, no. 6, 1 January 2007 (2007-01-01), US, pages 3240 - 3245, XP055769434, ISSN: 0021-8995, DOI: 10.1002/app.26440

## Description

This application claims priority filed on 18 October 2019 in the United States with Nr 62916914.

### Technical Field

The present invention relates to a method for increasing the growth of a plant by contacting a seed of said plant with a composition comprising at least a low molecular weight guar gum. In particular, the method permits the plant to develop its biomass and reach its maturity. The invention also relates to a seed having a coating with guar gum.

### Background Art

Economic demands, environmental concerns, and ecological considerations require that farmers continually improve their agricultural practices. These economic demands require that farmers utilize the most cost efficient practices in order to generate the highest crop yields, while using fewer chemicals with lower toxicity as environmental considerations. Finally, ecological considerations have led to integrated pest management systems which further challenge the farmer's ability to produce crop yields and quality within the economic constraints prevalent in today's market.

Plant, soil and seed treatments are used on almost every commercial crop on the market today. In this era of intensified agriculture, the seed is modified to obtain higher crop yields and high quality.

As examples, WO application WO2004071195 discloses a method to increase crop yield and accelerating crop emergence comprising administering a composition including a polysaccharide on a seed or seed piece of said crop or to a soil in which said crop is cultivated.

U.S. Patent US5554445 describes a seed encrusting method by use of microcrystalline chitosan in a form of liquid dispersion to form a highly adhesive, permeable, biodegradable and bioactive film on the seed surface. The seed encrusting preparation consists of providing a uniform coating of the seed with a mixture of seed, encrusting agent and/or dyes and/or nutrient media that the preparation is optionally combined with. However the germination power mentioned in this prior art is clearly not sufficient as the number of sprouted plants may be increased but without a significant improvement of growth.

US2012/220454 patent application describes a seed coating composition comprising at least one layer coating all or part of the seed. The layer may be made using guar gum or a guar derivative. If the coating layer is to act as a wetting agent, the polymer used has a lower average molecular weight, such as less than 100 kDa; if the coating layer is to act as a water retention agent, a higher average molecular weight is generally chosen, such as more than 500 kDa.

JP 2002 051611 patent application discloses a biodegradable seed coating comprising 50 % or more of unmodified guar gum and borate ions. The molecular weight is preferably superior or equal to 10 kDa, more preferably superior or equal to 50 kDa.

WO2014005555 discloses a method to increase the growth of a plant by coating a seed of said plant with a composition comprising at least a cationic guar having an average molecular weight of between about 100,000 Daltons and 3,500,000 Daltons. The cationic guars disclosed in WO2014005555 have relatively high molecular weight. One problem is that when such cationic guars are prepared in an aqueous composition for coating the seeds, the aqueous composition may become very thick and have poor fluidity. This problem pertains even if the cationic guars are present at low concentrations in the aqueous composition. This will cause problems for the application of the aqueous composition for coating the seeds.

WO2016101862 discloses a method to increase the growth of a plant comprising the step of contacting a seed of said plant with a composition comprising at least a cationic guar having an average molecular weight of between about 2,000 Daltons and about 90,000 Daltons. The cationic guars disclosed in WO2016101862 are derivatized guars, that is to say guar derivatives that are substituted at one or more sites of the polysaccharide with a cationic substituent group. While these guar derivatives actually provide outstanding benefits in seed treatment, they are not qualified for application in organic agriculture.

There is thus a need to develop a satisfactory method for improving the germination rate and the crop yield of a plant, and enhancing the growth of the plant as well, notably a method which can permit the plant to develop and increase its biomass.

There is especially a need to provide new seed coating compositions that rely on natural products, for instance biobased polymers, that have not been subjected to chemical modification, especially by the grafting of chemical groups.

Using such natural products would be obviously advantageous for use in environmental-friendly farming, such as especially organic farming.

### Summary of Invention

It appears that now it is possible to provide a seed treatment method which allows increasing the growth of a plant, notably the method allows the plant to develop its biomass and reach its maturity. The method also permits to increase the number of pods, the germination rate, the weight of grains and size, the length of roots and the height of seedlings, the general yield of the produced plant, even in conditions wherein irrigation is insufficient.

In one aspect, the present invention provides a method for increasing the growth of a plant which comprises at least the step of contacting a seed of said plant with a composition comprising from 10 wt% to 40 wt%, based on the total weight of the composition, of at least a guar gum having an average molecular weight of between 8,000 Daltons and 30,000 Daltons, said guar gum substantially consisting of native guar.

In one embodiment, the method comprises coating the seed of said plant with said composition. Then the coated seed may be applied onto or in the soil, notably in order to set in contact the coated seed with the ground.

In another embodiment, the method may be an "in situ coating" method. Notably, such method comprises the steps of implanting in a hole or a furrow in the soil a seed of a plant, and then applying a composition comprising at least a guar gum having an average molecular weight of between 8,000 Daltons and 30,000 Daltons, said guar gum substantially consisting of native guar, to surround or partially surround, or to be adjacent to the seed of said, so that the seed of said plant can come into contact with said composition, notably with said guar gum.

In still another embodiment, the method comprises administering a composition comprising at least a guar gum having an average molecular weight of between 8,000 Daltons and 30,000 Daltons, said guar gum substantially consisting of native guar, to a soil in which a plant is cultivated.

The method of the present invention also permits decreasing the detrimental effects of fungicides and herbicides that negatively impact germination rate and growth of the plants.

The method of the present invention can be easily carried out using conventional and commercially available equipment.

Advantageously, the low molecular weight guar gum used in the method of the invention is particularly suitable for use in environmental-friendly farming. In one embodiment, the low molecular weight guar gum of the invention may be compliant or suitable for organic farming.

The present invention generally relates to the use of the low molecular weight guar gum as described previously for use in agriculture and horticulture. In one specific embodiment, it also relates to the use of said low molecular weight guar gum in organic farming.

In one aspect, the invention provides an organic farming method for increasing the growth of a plant which comprises the step of contacting a seed of said plant with a composition comprising at least a guar gum having an average molecular weight of between 8,000 Daltons and 30,000 Daltons, said guar gum substantially consisting of native guar.

The present also relates to the use of a guar gum having an average molecular weight of between 8,000 Daltons and 30,000 Daltons, said guar gum substantially consisting of native guar, for seed coating in organic farming.

In another aspect, the present invention relates to the use of a seed coated with a guar gum having an average molecular weight of between 8,000 Daltons and 30,000 Daltons, said guar gum substantially consisting of native guar, in organic farming.

### Detailed Description

Throughout the description, including the claims, the term "comprising one" or "comprising a" should be understood as being synonymous with the term "comprising at least one", unless otherwise specified, "between" and "from··· to···" should be understood as being inclusive of the limits.

As used herein, "weight percent," "wt%," "percent by weight," "% by weight," and variations thereof refer to the concentration of a substance as the weight of that substance divided by the total weight of the composition and multiplied by 100.

As used herein, a product is considered as compliant or suitable for "organic farming" if it complies with at least one national organic certification. National organic certifications include, for instance, European regulations on organic production (CE N° 834/2007 and CE N° 889/2008), US National Organic Program (NOP), Japanese Agricultural Organic Standard (JAS).

In one aspect, the present invention provides a method for increasing the growth of a plant which comprises the step of contacting a seed of said plant with a composition comprising from 10 wt% to 40 wt%, based on the total weight of the composition, of at least a guar gum having an average molecular weight of between 8,000 Daltons and 30,000 Daltons, said guar gum substantially consisting of native guar.

In one embodiment, the seed is a raw seed that has not been treated by any agent. In another embodiment, the seed is one that has been treated with an agent other than the composition used in the method according to the present invention, for example, a seed which has been treated with an agrochemical such as a fungicide and an insecticide.

In the present application, guar designates the plant Cyanopsis tetragonoloba.

In the present application, "guar seeds" designates seeds derived from guar. Guar seeds comprise the hull, which is more or less fibrous, the germ, and two "guar splits" or "endosperm halves", which constitute the endosperm of guar. The splits (or endosperm) is/are rich in galactomannans. The guar seeds generally consist of 35 to 40% by weight of endosperm, 42 to 47% by weight of germ, and 14 to 17% by weight of hull.

In the present application, "guar flour" or "guar powder" designates a powder derived from the guar endosperm.

In the present application, "native guar" designates macromolecular chains of the galactomannan type, derived from guar endosperm, not having been subjected to chemical modification by the grafting of chemical groups. Native guar comprises macromolecules containing a principal chain of D-mannopyranose units linked in the beta (1-4) position substituted by D-galactopyranose units in the beta (1-6) position. Native guar has a mannose/galactose ratio of about 2.

In the present application, "guar gum" designates a product substantially consisting of native guar, in the form of guar splits, or of guar flour or powder.

Within the context of the present invention, "cationic guar" means a cationic derivative of a guar. "Cationic" means permanently positively charged whatever the pH or non permanently charged, e.g. a derivative that can be cationic below a given pH and neutral above that pH. Notably, the cationic guar is a chemically modified guar derivative which shows or potentially shows a net positive charge in a pH neutral aqueous medium.

Plant according to the present invention may be an agricultural and horticultural plant, a shrub, a tree or a grass, hereinafter sometimes collectively referred to as plant.

Seed according to the present invention may be of a crop or a plant species including but not being limited to corn (Zea mays), Brassica sp. (e.g., B. napus, B. rapa, B. juncea), alfalfa (Medicago sativa), rice (Oryza sativa), rye (Secale cereale), sorghum (Sorghum bicolor, Sorghum vulgare), millet (e.g., pearl millet (Pennisetum glaucum), proso millet (Panicum miliaceum), foxtail millet (Setaria italica), finger millet (Eleusine coracana)), sunflower (Helianthus annuus), safflower (Carthamus tinctorius), wheat (Triticum aestivum), soybean (Glycine max), tobacco (Nicotiana tabacum), potato (Solanum tuberosum), peanuts (Arachis hypogaea), cotton (Gossypium barbadense, Gossypium hirsutum), sweet potato (Ipomoea batatus), cassava (Manihot esculenta), coffee (Cofea spp.), coconut (Cocos nucifera), pineapple (Ananas comosus), citrus trees (Citrus spp.), cocoa (Theobroma cacao), tea (Camellia sinensis), banana (Musa spp.), avocado (Persea americana), fig (Ficus casica), guava (Psidium guajava), mango (Mangifera indica), olive (Olea europaea), papaya (Carica papaya), cashew (Anacardium occidentale), macadamia (Macadamia integrifolia), almond (Prunus amygdalus), sugar beets (Beta vulgaris), sugarcane (Saccharum spp.), oats, barley, vegetables, ornamentals, woody plants such as conifers and deciduous trees, squash, pumpkin, hemp, zucchini, apple, pear, quince, melon, plum, cherry, peach, nectarine, apricot, strawberry, grape, raspberry, blackberry, soybean, sorghum, sugarcane, rapeseed, clover, carrot, and Arabidopsis thaliana.

In one embodiment, the seed is of a vegetable species including but not being limited to tomatoes (Lycopersicon esculentum), lettuce (e.g., Lactuca sativa), green beans (Phaseolus vulgaris), lima beans (Phaseolus limensis), peas (Lathyrus spp.), cauliflower, broccoli, turnip, radish, spinach, asparagus, onion, garlic, pepper, celery, and members of the genus Cucumis such as cucumber (C. sativus), cantaloupe (C. cantalupensis), and musk melon (C. melo).

In one embodiment, the seed is of an ornamental species including but not being limited to hydrangea (Macrophylla hydrangea), hibiscus (Hibiscus rosasanensis), petunias (Petunia hybrida), roses (Rosa spp.), azalea (Rhododendron spp.), tulips (Tulipa spp.), daffodils (Narcissus spp.), carnation (Dianthus caryophyllus), poinsettia (Euphorbia pulcherrima), and chrysanthemum.

In one embodiment, the seed is of a conifer species including but not being limited to conifers pines such as loblolly pine (Pinus taeda), slash pine (Pinus elliotii), ponderosa pine (Pinus ponderosa), lodgepole pine (Pinus contorta), and Monterey pine (Pinus radiata), Douglas-fir (Pseudotsuga menziesii); Western hemlock (Tsuga canadensis); Sitka spruce (Picea glauca); redwood (Sequoia sempervirens); true firs such as silver fir (Abies amabilis) and balsam fir (Abies balsamea); and cedars such as Western red cedar (Thuja plicata) and Alaska yellow-cedar (Chamaecyparis nootkatensis).

In one embodiment, the seed is of a leguminous plant species including, but not being limited to, legumes, beans and peas. Beans include guar beans, locust beans, fenugreeks, soybeans, garden beans, cowpeas, mungbeans, lima beans, fava beans, lentils, chickpeas, peas, moth beans, broad beans, kidney beans, lentil, dry beans. Legumes include, but are not limited to, Arachis, e.g., peanuts, Vicia, e.g., crown vetch, hairy vetch, adzuki bean, mung bean, and chickpea, Lupinus, e.g., lupine, trifolium, Phaseolus, e.g., common bean and lima bean, Pisum, e.g., field bean, Melilotus, e.g., clover, Medicago, e.g., alfalfa, Lotus, e.g., trefoil, lens, e.g., lentil, and false indigo. Typical forage and turf grass for use in the methods described herein include but are not limited to alfalfa, orchard grass, tall fescue, perennial ryegrass, creeping bent grass, lucerne, birdsfoot trefoil, clover, stylosanthes species, lotononis bainessii, sainfoin and redtop. Other grass species include barley, wheat, oat, rye, orchard grass, guinea grass, sorghum or turf grass plant.

Notably, the seed is of one of the following crops and vegetables: corn, wheat, sorghum, soybean, tomato, cauliflower, radish, cabbage, canola, lettuce, rye grass, grass, rice, cotton, sunflower and the like.

It is understood that the term "seed" or "seedling" is not limited to a specific or particular type of species or seed. The term "seed" or " seedling" can refer to seed from a single plant species, a mixture of seed from multiple plant species, or a seed blend from various strains within a plant species. In one embodiment, the seed is a crop seed which includes but is not limited to rice, corn, wheat, barley, oats, soybean, cotton, sunflower, alfalfa, sorghum, rapeseed, sugarbeet, tomato, bean, carrot, tobacco or flower seeds.

According to the present invention, the guar gum has an average molecular weight (Mw) of between 8,000 Daltons and 30,000 Daltons.

As used herein, the "average molecular weight" of the guar gum means the weight average molecular weight of said guar gum.

The average molecular weight of the guar gum may be measured by GPC (Gel Permeation Chromatography). Measurements may be carried out using Shodex OH Pak columns and Agilent Refractive Index Detector, for instance with the conditions detailed in the examples.

It has been surprisingly found that plants wherein the seeds of the plants are treated with the low molecular weight guar gum according to the present invention show more robust root growth than those plants wherein the seeds of the plants are treated with high molecular weight guar gum. In the context of the present invention, high molecular weight guar gum mean guar gum having average molecular weight of 100,000 Daltons or above.

The guar gum according to the present invention may be prepared by depolymerizing natural guars that have high molecular weight, so as to "split" the guar polymers to desired sizes. Various depolymerisation methods are well known in the art and may be used for the present invention, such as treatment by using peroxo compound (e.g., hydrogen peroxide) and irradiation. Examples of such methods are disclosed in U.S. Pat. No. 4,547,571, U.S. Pat. No. 6,383,344 and U.S. Pat. No. 7,259,192. Various methods for cross-linking guars are also known, see for example U.S. Pat. No. 5,532,350 and U.S. Pat. No. 5,801,116. Alternatively, low molecular weight guars can be obtained by harvesting guar beans which are still at an early developmental stage such that the harvested guar beans contain low molecular weight natural guar gums.

The composition used for the method of the present invention may comprise only one guar gum as described above. Alternatively, the composition may comprise more than one guar gum. The composition *per se* is not part of the claimed invention.

The composition may comprise a binder. The binder (or any of the layers) can be molasses, granulated sugar, alginates, karaya gum, jaguar gum, tragacanth gum, polysaccharide gum, mucilage, gelatin, polyvinyl acetates, polyvinyl acetate copolymers, polyvinyl alcohols, polyvinyl alcohol copolymers, styrene acrylate polymers, styrene butadiene polymers, celluloses (including ethylcelluloses and methylcelluloses, hydroxypropylcelluloses, hydroxymethyl celluloses, hydroxymethylpropyl-celluloses), polyvinylpyrolidones, dextrins, maltodextrins, polysaccharides, fats, oils, proteins, gum arabics, shellacs, vinylidene chloride, vinylidene chloride copolymers, sodium lignosulfonate, calcium lignosulfonates, acrylic copolymers, starches, derivatized starches, polyvinylacrylates, zeins, carboxymethylcellulose, chitosan, polyethylene oxide, acrylimide polymers and copolymers, polyhydroxyethyl acrylate, methylacrylimide monomers, alginate, ethylcellulose, polychloroprene, syrups or any combination thereof.

The composition may also contain at least one bioactive ingredient. The bioactive ingredient can be one or more herbicides, plant growth regulators, crop dessicants, fungicides, bacteriocides, bacteriostats, insecticides, insect repellants, triazine herbicides, sulfonylurea herbicides, uracils, urea herbicides, acetanilide herbicides, organophosphonate herbicides, glyphosate salts, glyphosate esters, nitrilo oxime fungicides, imidazole fungicides, triazole fungicides, sulfenamide fungicides, dithio-carbamate fungicides, chloronated aromatic, dichloro aniline fungicides, carbamate insecticides, organo thiophosphate insecticides; perchlorinated organic insecticides, methoxychlor, miticides, propynyl sulfite, triazapentadiene miticides, chlorinated aromatic miticides, tetradifan, dinitrophenol miticides, binapacryl, or any mixture thereof.

In some aspects, the composition comprises at least a guar gum as described above and a plant biostimulant. Plant biostimulants are usually components other than fertilizers, which affect plant growth and/or metabolism upon foliar application or when being added to soil. Plant biostimulants generally fall within one of three categories: hormone-containing products, amino acid-containing products and humic acid-containing products. Plant biostimulants are used to treat crops in a commercial setting in view of their ability to, for example, increase growth rates, decrease pest plant growth, increase stress tolerance, increase photosynthetic rate, and increase disease tolerance. Plant biostimulants are generally believed to operate by up-regulating or down-regulating plant hormones.

The composition may further comprise a defoamer. Suitable defoamers include all customary defoamers including silicone-based and those based upon perfluoroalkyl phosphinic and phosphonic acids, in particular silicone-based defoamers, such as silicone oils, for example. Defoamers most commonly used are those from the group of linear polydimethylsiloxanes having an average dynamic viscosity, measured at 255° C, in the range from 1000 to 8000 mPas (mPas=millipascal-second), usually 1200 to 6000 mPas, and containing silica. Silica includes polysilicic acids, meta-silicic acid, ortho-silicic acid, silica gel, silicic acid gels, precipitated SiO₂, and the like. Defoamers from the group of linear polydimethylsiloxanes contain as their chemical backbone a compound of the formula HO-[Si(CH₃)₂-O-]ₙ-H, in which the end groups are modified, by etherification for example, or are attached to the groups -Si(CH₃)₃. Non-limiting examples of defoamers of this kind are RHODORSIL^{®} Antifoam 416 (Rhodia) and RHODORSIL^{®} Antifoam 481 (Rhodia). Other suitable defoamers are RHODORSIL^{®} 1824, ANTIMUSSOL 4459-2 (Clariant), Defoamer V 4459 (Clariant), SE Visk and AS EM SE 39 (Wacker). The silicone oils can also be used in the form of emulsions.

The composition may also contain other optional components which are known by a person skilled in the art for treatment of seeds, such as pigments, adjuvants, surfactants, and fertilizers.

The composition may be a solid or a liquid composition. In the case wherein the composition is solid, the composition may be in the form of a powder, a particle, an agglomerate, a flake, a granule, a pellet, a tablet, a brick, a paste, a block such as a molded block, a unit dose, or another solid form known to those of skill in the art. Preferably, the solid composition is in the form of a powder or a granule.

In some aspects, the composition is in the form of a granule. Granules containing the guar gum may be prepared in a three-step procedure: wet granulation followed by drying and sieving. The wet granulation step notably involves introduction and mixing of guar gum powders and a carrier, and optionally other ingredients, in granulation equipment (such as a mixing granulator). The mixing is conducted with spraying of water to the mixture. The wet granulation step will yield wet granules containing the guar gums. The weight ratio between the carrier and the guar gum which are to be mixed may be between 20:1 to 1:1, preferably, between 20:1 to 10:1. The water content introduced may be comprised between 10 wt% to 50 wt% based on the total weight of the wet granules. The carrier may be silicon dioxide, amorphous silica, precipitated silica, hydrated amorphous silica, precipitated silica, hydrated amorphous synthetic calcium silicate, hydrofobized precipitated silica, silica gel, sodium aluminium silicate, clay, zeolite, bentonite, layered silicate, caolim, sodium carbonate, sodium bicarbonate, sodium sulfate, sodium tripolyphosphate, sodium chloride, sodium silicate (water glass), magnesium chloride, calcium chloride, ammonium chloride, magnesium sulfate, calcium carbonate, calcium oxide, and/or calcium sulphate, or a mixture thereof. Notably, the carrier is selected from calcium chloride and calcium carbonate. The drying step notably involves drying the wet granules by using hot air flow. This step can usually be conducted in a fluid bed equipped with an air inlet and an air outlet. The sieving step may be conducted by using a vibrating plate.

The granules may have a diameter of 0.1 to 6 mm. Generally, normal granules have a diameter of 2-6 mm and micro granules have a diameter of 0.1-2 mm. Preferably, micro granules having a diameter of 0.5-1.6 mm are used.

Alternatively, the granules containing the guar gum may be prepared by using extrusion methods well known by a person skilled in the art. The extrusion methods are described in U.S. Patent US6146570. For example, the guar gum and the carrier, and optionally other ingredients, may be blended with heating. The weight ratio between the carrier and the guar gum may be between 20:1 to 1:1. Then a binder may be melted and introduced into the mixture of the guar gum and the carrier. Then, an extrusion step may be carried out with extruder temperature maintained between 55° C and 65° C. The soft warm granules may be formed and may be subsequently cooled below solidification point of the molten binder (at room temperature for instance) in order to obtain solid granules.

In the case that the seed treatment composition is liquid, the liquid composition may be a suspension, a dispersion, a slurry, a solution in a liquid carrier selected from water, organic solvents oils or a mixture thereof. The liquid composition may be prepared by mixing the guar gum as described above with the liquid carrier, optionally with other components, by using conventional methods. Preferably, the liquid composition is in the form of an aqueous solution. The composition comprises from 10 wt% to 40 wt% of the guar gum based on the total weight of the composition. In some aspects, the composition comprises from 20 wt% to 40 wt% of the guar gum based on the total weight of the composition. When conducting seed treatment in industrial scale, it is preferred that the liquid composition used for the seed treatment contains high concentration of the guar gum, so that less volume of the liquid composition is required to achieve the desired dosage for the treatment (i.e. the weight ratio of the guar gum to the seeds being treated). Using small volume of the liquid composition can save costs and is less tedious. However, when the concentration of the guar gum in the liquid composition increases, the fluidity of the liquid composition will significantly decrease. As a result, the liquid composition may become too "thick" to be effectively applied to the seed or the soil, and has poor ability to spread on the surface of the seed or in the soil as well. For example, an aqueous composition comprising 3 wt% of a high molecular weight guar gum may already be very thick and thus have poor fluidity. One advantage of the present invention is that the guar gum according to the present invention has an average molecular weight of between 8,000 Daltons and 30,000 Daltons, said guar gum substantially consisting of native guar. In such case, the resulting liquid composition can maintain excellent fluidity even if the guar gum is present at high concentrations, and therefore, such liquid composition can be conveniently used for treating the seeds or the soil. In one embodiment, the method of the present invention comprises a step in which the seed is coated with the composition as described above. Then the coated seed may be applied onto or in the soil, notably, in order to set in contact the coated seed with the ground.

Suitable coating techniques may be utilized to coat the seed or agglomeration of the seeds with the composition according to the present invention. Equipment that may be utilized for coating can include but are not limited to drum coaters, rotary coaters, tumbling drums, fluidized beds and spouted beds. It is appreciated that any suitable equipment or technique known by a person skilled in the art may be employed. The seed may be coated via a batch or continuous coating process. The seed may be coated with the composition according to the present invention which is either in solid form or liquid form. Preferably, an aqueous dispersion or solution is used.

The seeds may be separated prior to the coating step. In one embodiment, mechanical means, such as a sieve, may be employed for separating the seeds. The separated seeds can then be introduced into a coating machine having a seed reservoir. In one embodiment, the seeds are combined with the composition described herein, optionally with a binder and/or adhesive, in a mixing bowl.

In some aspects, one or more layers of coating which comprises the composition according to the present invention may be added onto the seeds or the agglomeration thereof. Outer layers can be introduced sequentially by coating the seeds or the agglomeration thereof in a rotating drum.

Agglomerators or agglomerator devices may also be utilized. Coating may be performed within a rotary coater by placing the seeds within a rotating chamber, which pushes the seeds against the inside wall of the chamber. Centrifugal forces and mixing bars placed inside the coater allow the seeds to rotate and mix with a coating layer comprising the composition according to the present invention. Binder or other coating materials can be pumped into the proximate center of the coater onto an atomizer disk that rotates along with the coating chamber. Upon hitting the atomizer disk, liquid adhesive is then directed outward in small drops onto the seeds.

Seed coating techniques also include, for example, placing the seeds in a rotating pan or drum. The seeds are then mist with water or other liquid, and then gradually a fine inert powder, e.g., diatomaceous earth, is added to the coating pan. Each misted seed becomes the center of a mass of powder, layers, or coatings that gradually increases in size. The mass is then rounded and smoothed by the tumbling action in the pan, similar to pebbles on the beach. The coating layers are compacted by compression from the weight of material in the pan. Binders often are incorporated near the end of the coating process to harden the outer layer of the mass. Binders can also reduce the amount of dust produced by the finished product in handling, shipping and sowing. Screening techniques, such as frequent hand screening, are often times utilized to eliminate blanks or doubles, and to ensure uniform size. For example, tolerance for seed coating compositions described herein can be +/-1/64 inch (0.4mm), which is the US seed trade standard for sizing, established long before coatings were introduced. For example, coated lettuce seed is sown most frequently with a belt planter through an 8/64 inch diameter round holes in the belt. This hole size requires that the lettuce seeds coated with the composition according to the present invention can be sized over a 7.5/64 inch screen and through an 8.5/64 inch screen.

In one embodiment of the present invention, the seed may be contacted with the composition by using an "in situ coating" process, notably by implanting in a hole or a furrow in the soil a seed of a plant, and then applying the composition according to the present invention to surround or partially surround, or to be adjacent to the seed, so that the seed come into contact with the composition, notably with the guar gum. According to the invention, the hole may notably be a hole, a cavity or a hollowed area. The seed may be one that has not be treated by any agent, or a seed that has been treated with an agrochemical (such as fungicide and insecticide) and that has not been treated with the composition of the present invention. Preferably, the composition is deposited on the carrier to provide a granule or a micro granule before being applied. The granule or the micro granule containing the guar gum may be prepared by using the methods described above.

In still another embodiment, the method according to the present invention comprises a step of administering the composition according to the present invention to a soil in which a plant is cultivated. Then the seeds of the plant can be applied to the soil so that the seeds will come into contact with the composition, notably with the guar gum. Notably, the composition in liquid form, such as in the form of aqueous solution/dispersion, or the composition in solid form, such as in powder or granule, may be used.

Preferably, the application of the seed and the application of the composition according to the present invention are performed mechanically. It is appreciated that either or both of the referenced applications can be performed manually as well.

In another aspect of the present invention, there is provided a seed coated with a guar gum having an average molecular weight of between 8,000 Daltons and 30,000 Daltons and substantially consisting of native guar.

The following examples are included to illustrate embodiments of the invention.

### Examples

Aqueous compositions for seed treatment were prepared according to the formulations in Table 1 below :

**Table 1**

| | **Formulation** |
|---|---|
| **Sample 1 (S1)** | An aqueous solution comprising 20 wt% of a guar gum having an average molecular weight of approximately 24,000 Daltons. |
| **Sample 2 (S2)** | An aqueous solution comprising 1 wt% of a guar gum having an average molecular weight of approximately 2,500,000 - 3,000,000 Da. |
| **Reference** | Water without any guar |

Sample 2 (S2) is for reference only and not according to the claimed invention.

### Average molecular weight

The average molecular weight of the guar gum were measured by Gel Permeation Chromatography.

Measurements may be carried out using Shodex OH Pak columns and Agilent Refractive Index Detector, under the following conditions:
- Mobile phase: cationic 100mM NaNO3 in 200ppm pDADMAC
- Flow rate: 1ml/min
- Inj. Volume: 200 µl
- Temperature: ambient
- **Run time: 50 min**

### Viscosity of the compositions

The viscosity of the samples were measured according to the below procedure.

Each sample (100 ml) was placed in a beaker and the viscosity was measured by Brookfield viscosity meter with No.2 spindle and at 20 rpm shearing speed after 1 minute. The measurement was done at 20° C.

It was found that Sample S1 has a viscosity of 3 156 cP while Sample S2 has a viscosity of 4 104 cP.

The composition according to the present invention (sample S1) has markedly lower viscosity in comparison to that comprising high molecular weight guar (sample S2) whereas it is 20 times more concentrated in guar gum, therefore, is easier to process.

### Enhancement of root growth of Corn

Corn (Zea mays, from commercial sources) seeds were treated with the different aqueous compositions according to the formulation in Table 1 above.

The seed were treated with a laboratory seed coater Norogard R150 as follows: weight seeds and introduce them into the seed coater chamber, turn on seed coater (300 rpm), introduce seed treatment slurry from the top, turn off seed coater (after 15 seconds of rotation) and discharge the treated seeds.

The aqueous formulations S1 and S2 were applied such as the guar dosage on the seeds was equal to 0.2%wt. Subsequently, the treated seeds were dried under an aspiration arm at room temperature for 1 hour.

Then the dried seeds were planted on top of a germination paper (GE Healtcare 3645) in a germination plastic box (12 x 18 x 5.5 cm) saturated with water (13 mL). 20 seeds were positioned in each box, for a total of 80 seeds per treatment. The germination boxes with lid covers were then position in a climatic chamber set at 15° C and 75% of humidity and exposed to LED light. The root length of the Corn plants was measured 7 days after planting manually with a ruler. For each treatment, the average root length was calculated, as well as the standard deviation. Statistical analysis with the software Minitab were conducted on the three root length distributions obtained.

Results are shown in Table 2 below.

**Table 2**

| **Treatment** | **Mean root length (mm)** | **Statistic group** *(Games-Howell pairwise comparison test with 95% Cl)* |
|---|---|---|
| **Control** | 16.2 | C |
| **S2** | 20.8 | B |
| **S1** | 24.8 | A |

As shown in Table 2, the Corn plants of which the seeds were treated with the guar according to the present invention (S1) exhibited more robust root growth in comparison to the untreated group (Control) and the plants of which the seeds were treated with a high molecular weight guar (S2). The seed treatment with sample S1 triggers an increase of root length by 53% compared to Control and by 19% compared to high molecular weight guar (S2). Based on Games-Howell statistical test, both guar samples (S1 and S2) significantly increase root length compared to control, and significant longer roots are obtained with low molecular weight guar treatment (S1) than with high molecular weight guar treatment (S2).

## Claims

1. A method for increasing the growth of a plant which comprises the step of contacting a seed of said plant with a composition comprising from 10 wt% to 40 wt%, based on the total weight of the composition, of at least a guar gum having an average molecular weight of between 8,000 Daltons and 30,000 Daltons, said guar gum substantially consisting of native guar.

2. The method according to claim 1, wherein the method comprises coating the seed of said plant with said composition.

3. The method according to anyone of claims 1 or 2, wherein said composition is a liquid composition, for instance in the form of an aqueous solution.

4. The method according to claim 3, wherein said composition comprises from 20 wt% to 40 wt% of said guar gum based on the total weight of the composition.

5. The method according to claim 1, wherein the method comprises at least the steps of :
a) the seed of said plant is implanted in a hole or a furrow in the soil; and
b) said composition is applied to surround or partially surround, or to be adjacent to the seed of said plant so that the seed of said plant comes into contact with said composition.

6. The method according to claim 5, wherein said composition is in the form of a granule or a micro granule.

7. The method according to claim 5 or 6, wherein said composition further comprises a carrier.

8. The method according to claim 1, wherein the method comprises at least the steps of :
a) administering said composition to the soil in which said plant is cultivated;
b) the seed of said plant is applied to the soil so that the seed of said plant comes into contact with said composition.

9. The method according to any one of claims 1 to 8, wherein said composition further comprises a bioactive ingredient.

10. The method according to any one of claims 1 to 9, wherein said composition further comprises a plant biostimulant.

11. A seed coated with a guar gum having an average molecular weight of between 8,000 Daltons and 30,000 Daltons and substantially consisting of native guar.

12. An organic farming method for increasing the growth of a plant which comprises the step of contacting a seed of said plant with a composition comprising at least a guar gum having an average molecular weight of between 8,000 Daltons and 30,000 Daltonsand substantially consisting of native guar.

13. Use of a guar gum having an average molecular weight of between 8,000 Daltons and 30,000 Daltons and substantially consisting of native guar for seed coating in organic farming.

14. Use of a seed coated with a guar gum having an average molecular weight of between 8,000 Daltons and 30,000 Daltons and substantially consisting of native guar in organic farming.

## Patentansprüche

1. Verfahren zur Steigerung des Wachstums einer Pflanze, das den Schritt umfasst, bei dem ein Samen der Pflanze mit einer Zusammensetzung in Kontakt gebracht wird, die 10 Gew.-% bis 40 Gew.-%, bezogen auf das Gesamtgewicht der Zusammensetzung, mindestens eines Guarans mit einem mittleren Molekulargewicht zwischen 8.000 Dalton und 30.000 Dalton umfasst, wobei das Guaran im Wesentlichen aus nativem Guar besteht.

2. Verfahren nach Anspruch 1, wobei das Verfahren Beschichten des Samens der Pflanze mit der Zusammensetzung umfasst.

3. Verfahren nach Anspruch 1 oder 2, wobei es sich bei der Zusammensetzung um eine flüssige Zusammensetzung, beispielsweise in Form einer wässrigen Lösung, handelt.

4. Verfahren nach Anspruch 3, wobei die Zusammensetzung 20 Gew.-% bis 40 Gew.-% des Guarans bezogen auf das Gesamtgewicht der Zusammensetzung umfasst.

5. Verfahren nach Anspruch 1, wobei das Verfahren mindestens die folgenden Schritte umfasst:
a) der Samen der Pflanze in ein Loch oder eine Furche im Boden gesetzt; und
b) die Zusammensetzung wird so aufgebracht, dass sie den Samen der Pflanze umgibt oder teilweise umgibt oder an ihn angrenzt, so dass der Samen der Pflanze mit der Zusammensetzung in Kontakt kommt.

6. Verfahren nach Anspruch 5, wobei die Zusammensetzung in Form eines Granulats oder eines Mikrogranulats vorliegt.

7. Verfahren nach Anspruch 5 oder 6, wobei die Zusammensetzung ferner einen Träger umfasst.

8. Verfahren nach Anspruch 1, wobei das Verfahren mindestens die folgenden Schritte umfasst:
a) Applizieren der Zusammensetzung an den Boden, in dem die Pflanze kultiviert wird;
b) der Samen der Pflanze wird auf den Boden ausgebracht, so dass der Samen der Pflanze mit der Zusammensetzung in Kontakt kommt.

9. Verfahren nach einem der Ansprüche 1 bis 8, wobei die Zusammensetzung ferner einen bioaktiven Bestandteil umfasst.

10. Verfahren nach einem der Ansprüche 1 bis 9, wobei die Zusammensetzung ferner ein Pflanzenbiostimulans umfasst.

11. Samen, beschichtet mit einem Guaran, das ein mittleres Molekulargewicht zwischen 8.000 Dalton und 30.000 Dalton aufweist und im Wesentlichen aus nativem Guar besteht.

12. Ökologisches Anbauverfahren zur Steigerung des Wachstums einer Pflanze, das den Schritt umfasst, bei dem ein Samen der Pflanze mit einer Zusammensetzung in Kontakt gebracht wird, die mindestens ein Guaran mit einem mittleren Molekulargewicht zwischen 8.000 Dalton und 30.000 Dalton umfasst, wobei das Guaran im Wesentlichen aus nativem Guar besteht.

13. Verwendung eines Guarans mit einem mittleren Molekulargewicht zwischen 8.000 Dalton und 30.000 Dalton, das im Wesentlichen aus nativem Guar besteht, zur Saatgutbeschichtung beim ökologischen Anbau.

14. Verwendung eines mit einem Guaran, das ein mittleres Molekulargewicht zwischen 8.000 Dalton und 30.000 Dalton aufweist und im Wesentlichen aus nativem Guar besteht, beschichteten Samens beim ökologischen Anbau.

## Revendications

1. Procédé pour augmenter la croissance d'une plante qui comprend l'étape de mise en contact d'une semence de ladite plante avec une composition comprenant de 10 % en poids à 40 % en poids, sur la base du poids total de la composition, d'au moins une gomme de guar ayant un poids moléculaire moyen compris entre 8 000 Daltons et 30 000 Daltons, ladite gomme de guar étant essentiellement constituée de guar natif.

2. Procédé selon la revendication 1, dans lequel le procédé comprend l'enrobage de la semence de ladite plante par ladite composition.

3. Procédé selon l'une quelconque des revendications 1 ou 2, dans lequel ladite composition est une composition liquide, par exemple sous la forme d'une solution aqueuse.

4. Procédé selon la revendication 3, dans lequel ladite composition comprend de 20 % en poids à 40 % en poids de ladite gomme de guar par rapport au poids total de la composition.

5. Procédé selon la revendication 1, le procédé comprenant au moins les étapes de :
a) la semence de ladite plante est implantée dans un trou ou un sillon dans le sol ; et
b) ladite composition est appliquée pour entourer ou entourer partiellement, ou pour être adjacente à la semence de ladite plante de sorte que la semence de ladite plante entre en contact avec ladite composition.

6. Procédé selon la revendication 5, dans lequel ladite composition est sous la forme d'un granulé ou d'un microgranulé.

7. Procédé selon la revendication 5 ou 6, dans lequel ladite composition comprend en outre un support.

8. Procédé selon la revendication 1, le procédé comprenant au moins les étapes de :
a) administration de ladite composition sur le sol dans lequel ladite plante est cultivée ;
b) la semence de ladite plante est appliquée de sorte que la semence de ladite plante entre en contact avec ladite composition.

9. Procédé selon l'une quelconque des revendications 1 à 8, dans lequel ladite composition comprend en outre un ingrédient bioactif.

10. Procédé selon l'une quelconque des revendications 1 à 9, dans lequel ladite composition comprend en outre un biostimulant végétal.

11. Semence enrobée par une gomme de guar ayant un poids moléculaire moyen compris entre 8 000 Daltons et 30 000 Daltons et constituée essentiellement de guar natif.

12. Procédé d'agriculture biologique pour augmenter la croissance d'une plante, qui comprend l'étape de mise en contact d'une semence de ladite plante avec une composition comprenant au moins une gomme de guar ayant un poids moléculaire moyen compris entre 8 000 Daltons et 30 000 Daltons et essentiellement constituée de guar natif.

13. Utilisation d'une gomme de guar ayant un poids moléculaire moyen compris entre 8 000 Daltons et 30 000 Daltons et essentiellement constituée de guar natif pour l'enrobage de semences dans l'agriculture biologique.

14. Utilisation d'une semence enrobée d'une gomme de guar ayant un poids moléculaire moyen compris entre 8 000 Daltons et 30 000 Daltons et essentiellement constituée de guar natif dans l'agriculture biologique.
